# EUROPEAN PATENT SPECIFICATION

(11) **EP 0 700 537 B1**
(45) Date of publication and mention of the grant of the patent: **19.08.1998**
(21) Application number: 94915631.9
(22) Date of filing: 20.05.1994
(51) Int. Cl.: G05B 19/042, H04Q 9/16

(54) **REMOTE CONTROL SYSTEMS**
FERNSTEUERUNGSSYSTEME
SYSTEMES DE COMMANDE A DISTANCE

(30) Priority: 26.05.1993 GB 9310845
(43) Date of publication of application: 13.03.1996
(73) Proprietor: Delmatic Limited, London W1P 5PN (GB)
(72) Inventor: WILLIAMS, Edward, London NW2 JP (GB)
(74) Representative: Robson, Aidan John
(86) International application number: GB9401086
(87) International publication number: WO9428471

(56) References cited:
- EP-A- 0 376 738
- GB-A- 2 180 972
- US-A- 4 730 309

## Description

This invention relates to remote control systems comprising a central controller (Master) and a plurality of remote modules (Slaves) responsive to instructions from the controller.

Systems of this type are used, for example, for controlling lighting, heating, or ventilating in large buildings. In such systems the controller can send status enquiries to all the remote modules in the building and can receive back from these modules data as to the status of the systems they are controlling, e.g. is a light on or off. The controller may then send out instructions to specific modules to cause them to control the apparatus (lights), to which they are connected in a desired manner.

In existing remote control systems such as the one described in GB-A-2180472 all the modules are typically connected to a bus along which instructions pass. Each module is given a unique address and each instruction for a module is coupled with an address identifying the module for which that instruction is intended. It will be appreciated that when such a system is installed it is necessary to pre-programme each module with its unique address and to have some knowledge of where that module has been installed.

In another form of known system modules are connected in a ring and a token is passed from module to module. When the token is latched in a module a status enquiry can be sent from the controller to that module and the status data sent back to the controller. An instruction may then be sent to that module if it is desired to change its status.

In a preferred embodiment of the present invention all the modules are connected in series with the controller, and a data packet, including instructions for modules, passes through each the module in turn. Part of the data packet comprises a module counter which is incremented as the packet passes through each module. By examining the status of the module counter a module is able to derive its location (address) in the loop of modules and can thus determine whether an instruction included in the data packet is intended for that particular module.

The invention is defined in the appended claims to which reference should now be made.

A preferred embodiment of the present invention will now be described, in detail, by way of example, with reference to the accompanying drawings in which:
Figure 1 is a schematic diagram of a controller and associated remote modules;
Figure 2 is a block diagram of a module of the type used in Figure 1;

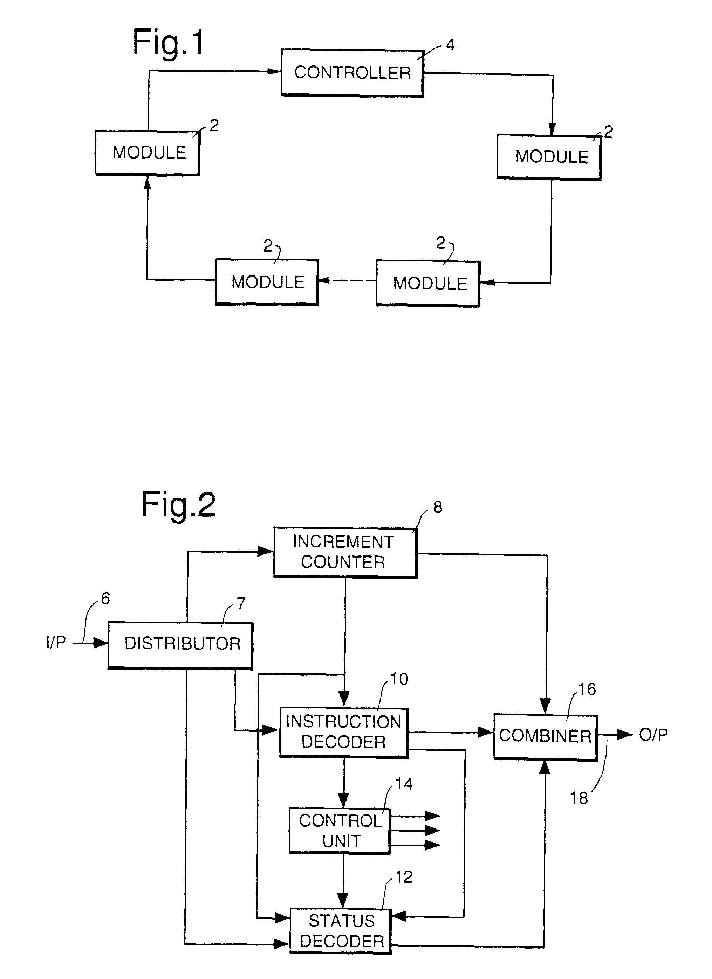

Figure 1 shows how a plurality of modules 2 are connected in series with a controller 4 in a loop. Each module and the controller has a serial input and a serial output. A data packet generated by the controller passes from its serial output to the serial input of the first module in the loop. The data passes through the module, one byte at a time, and is then available at the output of the module. There is, however, a lag between input and output of, for example, 3 bits. Thus the front end of a data packet will have left a module before the end has entered that module. Once a data packet has passed through all the modules in the loop it returns to the controller 4.
The time taken for the head of a data packet to pass round a ring of modules will be (module delay) x (number of modules), i.e. at 9600 baud with a 3 bit module delay the head of a data packet will travel right round the ring in about 18ms. The data packet, (known as the notepad) sent out by the controller comprises three main portions. These are an instruction portion, a module counter, and an address and data portion. The whole packet is terminated by an end code.

When the notepad reaches the first module in the loop the module counter is incremented. The instruction portion is then decoded and acted upon if it is addressed to the module number indicated by the current value of the module counter. The instruction can be an instruction to, for example, switch on a single light or a batch of lights, i.e. all those between modules 1 and 8. Alternatively it may be a status enquiry of the modules which will cause the status of each module in turn to be written into the address and data portion of the notepad if there has been a change in module status. Thus as the notepad passes round the loop the address and data portion increase in size as more information is written into it.

In Figure 2 there is shown a block diagram of a module and its operation can be better explained with reference to this. The module comprises an input 6 receiving data packets which have passed through other modules in the chain and which were originally generated by the controller. Each packet passes to a distributor which sends the module counter data to a counter incrementor 8. The distributor 7 sends the instruction portion of the notepad to an instruction decoder 10 and the address and data portion to a status decoder 12.

The counter incrementor 8 has an output coupled to the instruction decoder 10 and to the status decoder 12. Thus the instruction decoder and the status decoder have available the current value of the module counter.

The instruction decoder 10 decodes the instruction portion of the notepad. In a lighting control system this instruction may comprise, for example, turn on lights. The data section of the address and data portion of the notepad will include information as to the lights to be switched on. Thus by comparing the addresses and lights to be switched on with the current module address the instruction decoder can compute whether or not the instruction is to be acted upon by that particular module. If it is then the relevant instruction is sent to a control unit 14 which will implements the instruction.

If the instruction is a status enquiry the instruction decoder sends an enable signal to the status decoder 12 which receives data from the control unit as to its status. The status decoder also receives the current value of the module counter and the address and data portion of the notepad. The status decoder will write into the address and data portion the current module address and the status of the apparatus which it is controlling. Usually this will only happen if there has been a change in status since the last enquiry. Thus as the notepad passes around the ring the address and data portion of the notepad will increase in size.

The current value of the module counter, the instruction, and the address and data portion are recombined in a combiner 16 and then passed to the next module in the chain via an output 18.

Each module may be implemented in a conventional gate array on a single chip. Alternatively, for a more intelligent module, a microprocessor could be used.

It will be appreciated from the above description that in use each module is able to work out its address (the module counter value) from its position in the ring, i.e. the data which arrives at the ring includes a module counter which that module uses to derive its own address. There is therefore no need for any unique address to be pre-programmed into a module and when modules are being installed in a building management system, for e.g. lighting control, identical modules can be installed at each location.

In the current system a switch status notepad is 10 bytes long and is transmitted round the ring at 9600 baud with a delay of 3 bits per module. The notepad includes a reset sequence, headers, the module counter and the inverse of every byte as an error check.

For a module to add a switch status onto the end of a notepad as it passes through a module it first changes the end of the notepad byte to a continue byte. It then adds a module number byte of status information and a new end of notepad byte. This means that the three bytes and their inverses are added on for each module that has a change of status.

Thus, if two modules have a change of status in a 60 module ring it will add 12 bytes to the notepad making it 22 bytes long. This means that the time taken for the notepad to pass round the ring, assuming a delay of 3 bits per module, is 18 + 22 = 40ms, approx.

When the notepad is received back by the controller a switch notepad can be generated to control the lights to be switched. This resultant notepad is 10 bytes long plus 4 bytes for every module to be addressed. If 6 modules needed to turn lamps on or off this would require a 34 byte notepad which would take approximately 34ms to pass round the ring. Thus the total time from a switch being pressed to a light being turned on would be about 75ms. In practice, however, longer is required because delays are introduced to improve immunity to switching noise etc.

If there is little activity in the system then, after it has received a status notepad, indicating the change of status of one or more of the modules, the controller can issue a command notepad asking these modules to varify their status. This could be done 10 or 20 times and the system could still easily respond within 200ms. This is a check on the status received.

The system described above is thus self-addressing. That is to say there is no need for any module to be preprogrammed with a unique address. Each module will derive its own address from its position in the ring as determined by the module counter included in a data packet passing around the ring.

## Claims

1. A remote control system comprising a controller (4) and a plurality of remote modules (2) connected in series with the controller, wherein a data packet, which includes a module counter portion and an instruction portion of instructions for individual modules, is generated by the controller and passes from module to module, each module comprises means (8) to increment the module counter portion before passing the data packet to the next module, and each module further comprises means (10,12) to derive a module address for that module from the value of the module counter at that module and means for executing instructions in the instruction portion for that module.

2. A remote control system according to claim 1 in which the instruction portion of the data packet comprises a status enquiry for the modules in the system.

3. A remote control system according to claim 1 or 2 in which each module comprises means (16) to add status data for that module to the data packet before the data packet is passed to the next module, wherein the status data includes the derived module address.

4. A remote control system according to claim 1, 2 or 3 in which the means for executing instructions in each module comprises means (10) to decode an instruction received in a data packet and means (14) to execute the instruction in dependence on the comparison between a module address included in the data packet and the module address derived by that module.

5. A remote control system according to any preceding claim in which the modules are connected in a ring with the controller (4) whereby a data packet generated by the controller passes through each module (2) in turn before returning to the controller.

6. A module (2) for use in a remote control system comprising an input means (6) for receiving a data packet and output means (18) for sending out a data packet, wherein each data packet includes a module counter portion and an instruction portion of instructions for individual modules, the module comprising means (8) to increment the module counter as it passes through the module and means (10,12) to derive a module address for that module from the value of the module counter at that module each time a data packet is received and means to execute instructions for that module received in the data packet.

## Patentansprüche

1. Fernsteuerungssystem enthaltend eine Steuerung (4) und mehrere Fernmodule (2), die mit der Steuerung in Reihe verbunden sind, wobei ein Datenpaket, das einen Modulzählerabschnitt und einen Anweisungsabschnitt aus Anweisungen für einzelne Module enthält, von der Steuerung erzeugt wird und von Modul zu Modul weitergeleitet wird, jeder Modul Mittel (8) zum Inkrementieren des Modulzählerabschnitts enthält, bevor das Datenpaket zum nächsten Modul weitergegeben wird, und jeder Modul ferner Mittel (10, 12) zum Ableiten einer Moduladresse für diesen Modul aus dem Wert des Modulzählers bei diesem Modul enthält sowie Mittel zum Ausführen von Anweisungen in dem Anweisungsabschnitt für diesen Modul enthält.

2. Fernsteuerungssystem nach Anspruch 1, bei dem der Anweisungsabschnitt des Datenpakets eine Statusanfrage für die Module in dem System enthält.

3. Fernsteuerungssystem nach Anspruch 1 oder 2, bei dem jeder Modul Mittel (16) zum Hinzufügen von Statusdaten für diesen Modul zu dem Datenpaket enthält, bevor das Datenpaket zum nächsten Modul weitergeleitet wird, wobei die Statusdaten die abgeleitete Moduladresse enthalten.

4. Fernsteuerungssystem nach Anspruch 1, 2 oder 3, bei dem die Mittel zum Ausführen von Anweisungen in jedem Modul Mittel (10) zum Decodieren einer in einem Datenpaket enthaltenen Anweisung enthalten sowie Mittel (14) zum Ausführen der Anweisung in Abhängigkeit von dem Vergleich zwischen einer in dem Datenpaket enthaltenen Moduladresse und der von diesem Modul abgeleiteten Moduladresse enthalten.

5. Fernsteuerungssystem nach irgendeinem vorangegangenen Anspruch, bei dem die Module in einem Ring mit der Steuerung (4) verbunden sind, wodurch ein von der Steuerung erzeugtes Datenpaket durch jeden Modul (2) in Folge läuft, bevor es zurück zur Steuerung gelangt.

6. Modul (2) zur Verwendung in einem Fernsteuerungssystem, enthaltend Eingangsmittel (6) zum Empfangen eines Datenpakets und Ausgangsmittel (18) zum Aussenden eines Datenpakets, wobei jedes Datenpaket einen Modulzählerabschnitt und einen Anweisungsabschnitt aus Anweisungen für einzelne Module enthält, der Modul Mittel (8) zum Inkrementieren des Modulzählers enthält, wenn dieser durch den Modul läuft, und Mittel (10, 12) zum Ableiten einer Moduladresse für diesen Modul aus dem Wert des Modulzählers bei diesem Modul enthält, und zwar immer dann, wenn ein Datenpaket empfangen wird, sowie Mittel zum Ausführen von Anweisungen für diesen Modul enthält, die in dem empfangenen Datenpaket enthalten sind.

## Revendications

1. Système de commande à distance comportant un dispositif de commande (4) et plusieurs modules éloignés (2) connectés en série avec le dispositif de commande, dans lequel un paquet de données, qui comprend une partie à compteur de module et une partie à instructions formée d'instructions pour des modules individuels, est généré par le dispositif de commande et passe d'un module à l'autre, chaque module comporte des moyens (8) destinés à incrémenter la partie à compteur de module avant de faire passer le paquet de données au module suivant, et chaque module comporte en outre des moyens (10, 12) destinés à dériver une adresse de module pour ce module à partir de la valeur du compteur de module à ce module, et des moyens destinés à exécuter des instructions dans la partie à instructions pour ce module.

2. Système de commande à distance selon la revendication 1, dans lequel la partie à instructions du paquet de données comporte une demande d'état pour les modules dans le système.

3. Système de commande à distance selon la revendication 1 ou 2, dans lequel chaque module comporte des moyens (16) destinés à additionner des données d'état pour ce module au paquet de données avant que le paquet de données soit passé au module suivant, les données d'état comprenant l'adresse de module dérivée.

4. Système de commande à distance selon la revendication 1, 2 ou 3, dans lequel les moyens destinés à exécuter des instructions dans chaque module comportent des moyens (10) destinés à décoder une instruction reçue dans un paquet de données et des moyens (14) destinés à exécuter l'instruction en dépendance de la comparaison entre une adresse de module incluse dans le paquet de données et l'adresse de module dérivée par ce module.

5. Système de commande à distance selon l'une quelconque des revendications précédentes, dans lequel les modules sont connectés dans un anneau avec le dispositif de commande (4), grâce à quoi un paquet de données généré par le dispositif de commande passe tour à tour à travers chaque module (2) avant de revenir au dispositif de commande.

6. Module (2) destiné à être utilisé dans un système de commande à distance, comportant un moyen d'entrée (6) destiné à recevoir un paquet de données et un moyen de sortie (18) destiné à envoyer un paquet de données, dans lequel chaque paquet de données comprend une partie à compteur de module et une partie à instructions formée d'instructions pour des modules individuels, le module comportant des moyens (8) destinés à incrémenter le compteur du module lorsqu'il passe à travers le module et des moyens (10, 12) destinés à dériver une adresse de module pour ce module à partir de la valeur du compteur de module à ce module à chaque fois qu'un paquet de données est reçu, et des moyens destinés à exécuter des instructions pour ce module, reçues dans le paquet de données.
